(19) Europäisches Patentamt
European Patent Office
Office européen des brevets

(11) **EP 3 913 377 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **20175181.5**

(22) Anmeldetag: **18.05.2020**

(51) Internationale Patentklassifikation (IPC):
**G01P 5/26** *(2006.01)*      **B25J 9/16** *(2006.01)*
**G01S 17/88** *(2006.01)*      **G01S 7/497** *(2006.01)*
**G01S 17/58** *(2006.01)*

(52) Gemeinsame Patentklassifikation (CPC):
**B25J 9/1684; G01S 7/497; G01S 17/58; G01S 17/88;** B25J 9/1694; G01P 5/26; G05B 2219/37371

(54) **VERFAHREN UND VORRICHTUNG ZUM ABFAHREN EINER BAHNKURVE IM NAHBEREICH EINER OBJEKTOBERFLÄCHE**

METHOD AND DEVICE FOR MOVING A TRAJECTORY IN THE VICINITY OF AN OBJECT SURFACE

PROCÉDÉ ET DISPOSITIF D'ARRÊT D'UNE TRAJECTOIRE COURBE À PROXIMITÉ D'UNE SURFACE D'OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.11.2021 Patentblatt 2021/47**

(73) Patentinhaber: **MCI Internationale Hochschule GmbH**
**6020 Innsbruck (AT)**

(72) Erfinder:
• **Hausberger, Thomas**
  **6020 Innsbruck (AT)**
• **Kraxner, Michael**
  **6020 Innsbruck (AT)**
• **Massow, Benjamin**
  **6020 Innsbruck (AT)**
• **Mayerl, Christian**
  **6020 Innsbruck (AT)**
• **Pillei, Martin**
  **6020 Innsbruck (AT)**

(74) Vertreter: **Schwarz & Partner Patentanwälte GmbH**
**Patentanwälte**
**Wipplingerstraße 30**
**1010 Wien (AT)**

(56) Entgegenhaltungen:
**US-A1- 2004 125 378      US-A1- 2006 181 236**

• **BERTINI L ET AL: "Automated Experimental Modal Analysis of Bladed Wheels with an Anthropomorphic Robotic Station", EXPERIMENTAL MECHANICS, SPRINGER NEW YORK LLC, US, vol. 57, no. 2, 17 October 2016 (2016-10-17), pages 273 - 285, XP036153368, ISSN: 0014-4851, [retrieved on 20161017], DOI: 10.1007/S11340-016-0223-5**
• **CHESNAKAS C J ET AL: "FULL THREE-DIMENSIONAL MEASUREMENTS OF THE CROSS-FLOW SEPARATION REGION OF A 6:1 PROLATE SPHEROID", EXPERIMENTS IN FLUIDS, SPRINGER, HEIDELBERG, DE, vol. 17, no. 1/02, June 1994 (1994-06-01), pages 68 - 74, XP000477232, ISSN: 0723-4864**
• **NEIL C. TEMPERLEY ET AL: "Application of computational fluid dynamics and laser Doppler velocimetry to liquid ultrasonic flow meter design", FLOW MEASUREMENT AND INSTRUMENTATION., vol. 15, no. 3, June 2004 (2004-06-01), GB, pages 155 - 165, XP055736966, ISSN: 0955-5986, DOI: 10.1016/j.flowmeasinst.2003.12.005**

**Beschreibung**

Die vorliegende Erfindung betrifft ein Verfahren zur Strömungsvermessung von Fluiden im Nahbereich einer Objektoberfläche mit einem auf einer parallelen oder seriellen Kinematik mit zumindest 6 Freiheitsgraden befestigten Laser-Doppler-Velocimeter. Des Weiteren betrifft die Erfindung eine Vorrichtung zum Abfahren einer Bahnkurve im Nahbereich der Objektoberfläche, umfassend eine parallele oder serielle Kinematik mit zumindest 6 Freiheitsgraden und eine Einrichtung aus der Gruppe der Messgeräte oder der Werkzeuge, sowie ein Verfahren zur Ermittlung einer Bahnkurve im Nahbereich einer Objektoberfläche mit einer erfindungsgemäßen Vorrichtung.

HINTERGRUND DER ERFINDUNG UND STAND DER TECHNIK

In vielen Bereichen der Technik spielt die Strömungsmechanik eine wichtige Rolle. Meist steht die Optimierung des Strömungswiderstandes eines Objektes in Fluiden wie Luft oder Wasser bzw. Wärme- und Stoffaustausch im Vordergrund. Insbesondere im Automobil- und Flugzeugbau wird besonderes Augenmerk auf die Aerodynamik, einem Teilgebiet der Strömungsmechanik, gelegt, um die Fahr- bzw. Flugeigenschaften zu optimieren und dabei den Energiebedarf zum Betreiben eines Fahr- bzw. Flugzeugs zu minimieren.

Neben zahlreichen mechanischen Methoden zur Vermessung von Fluidströmungen, mit welchen in der Regel die Fluidströmung durch die Messung selbst maßgeblich beeinflusst wird, sind berührungsfreie Methoden entwickelt worden, mit welchen die Veränderung der Fluidströmung durch die Messung vernachlässigbar ist.

Insbesondere zur Messung von Fluidströmungsgeschwindigkeiten wird dabei neben der Particle Image Velocimetry (PIV), der Magnet Resonance Velocimetry (MRV), der Particle Tracking Velocimetry (PTV), etc. die Laser-Doppler-Anemometry (LDA) bzw. die Laser-Doppler-Velocimetry angewendet.

Bei der Laser-Doppler-Velocimetry handelt es sich um ein optisches Messverfahren zur punktuellen Bestimmung von Geschwindigkeitskomponenten in Fluidströmungen. Auch die punktuelle Bestimmung von Schwingungszuständen von Objektoberflächen wird dadurch ermöglicht. Grundsätzlich kann die Laser-Doppler-Velocimetry anhand zweier Modelle erklärt werden, dem Dopplermodell und dem Interferenzstreifenmodell.

**Dopplermodell:**

Im Rahmen des Dopplermodells wird eine Differenzfrequenz $\Delta f = f_R - f_d$ bestimmt, wobei $f_R$ die Frequenz einer Referenzwelle und $f_d$ die Frequenz des von einem bewegten Partikel gestreuten Lichts bezeichnet. Dabei ist die Frequenz $f_d$ des gestreuten Lichts zur Frequenz $f_l$ des Laserlichts dopplerverschoben.

Bei Verwendung eines Einstrahl-Laser-Doppler-Systems kann beispielsweise der Schwingungszustand von Objektoberflächen bestimmt werden, indem der Laserstrahl auf einen bestimmten Punkt auf der Objektoberfläche gerichtet wird. Im Falle einer Überlagerung des Streulichtes in Rückstreuung (Streuwinkel 180°) mit einer Referenzwelle der Frequenz $f_R = f_l$ ergibt sich

$$v_{\vec{e}_l} = \frac{\lambda_l}{2} \cdot \Delta f \qquad (1)$$

für die Geschwindigkeitskomponente in Richtung der Laserstrahlachse $\vec{e}_l$, entsprechend dem Produkt der halben Wellenlänge $\lambda_l$ des eingestrahlten Lasers und der gemessenen Differenzfrequenz $\Delta f$.

Zur Geschwindigkeitsmessung von Strömungen kommt bevorzugt ein Zweistrahl-Laser-Doppler-System zum Einsatz. Dabei werden zwei (kohärente) Laserstrahlen mit Achsenorientierungen $\vec{e}_{l_1}$ und $\vec{e}_{l_2}$ unter einem Winkel von $2\varphi$ zur Kreuzung gebracht, wobei die im Kreuzungspunkt bzw. Schnittpunkt beleuchteten Partikel einer Strömung das Licht der beiden Laserstrahlen mit unterschiedlicher Dopplerverschiebung, entsprechend den Frequenzen $f_{d_1}$ und $f_{d_2}$, streuen. Bei Überlagerung der beiden Streuwellen auf einem Detektor zur Messung der Differenzfrequenz $\Delta f$ ergibt sich

$$v_{\vec{e}_\perp} = \frac{\lambda_l}{2 sin\varphi} \cdot \Delta f \qquad (2)$$

für die Geschwindigkeitskomponente orthogonal zur Winkelhalbierenden der beiden Laserstrahlen. Man spricht bei einer solchen Anordnung der Laser von einem Laser-Doppler-Velocimeter (LDV).

**Interferenzstreifenmodell:**

Im Interferenzstreifenmodell, welches für Partikelgrößen $d \ll \lambda_l$ gilt, wird die Interferenz der beiden Laserstrahlen im Kreuzungspunkt bzw. Schnittpunkt (Messvolumen) betrachtet. Für kohärente Laserstrahlen entsteht dabei ein statisches Interferenzmuster, wobei die (im Wesentlichen geradlinigen) Interferenzstreifen um eine Distanz

$$\Delta x = \frac{\lambda_l}{2 sin\varphi} \qquad (3)$$

(idealerweise äquidistant) beabstandet und parallel zur Winkelhalbierenden der beiden sich schneidenden Laserstrahlen ausgerichtet sind. Ein durch das Interferenzmuster bewegtes Partikel streut das Licht der Interferenzstreifen periodisch mit einer messbaren Signal-Frequenz $f_S$. Somit errechnet sich die Geschwindigkeitskomponente eines Partikels orthogonal zu den Interferenzstreifen aus

$$v_{\vec{e}_\perp} = \frac{\lambda_l}{2 sin\varphi} \cdot f_S \qquad (4)$$

in Übereinstimmung mit dem Dopplermodell unter Verwendung eines Zweistrahl-Laser-Doppler-Systems für $f_S = \Delta f$.

Durch die Kombination mehrerer Laserpaare verschiedener Wellenlänge wird die Messung von Geschwindigkeitskomponenten in mehrere Richtungen ermöglicht, wobei die Laserpaare im Allgemeinen einen gemeinsamen Kreuzungspunkt und damit ein gemeinsames Messvolumen aufweisen. Die Interferenzmuster der verschiedenen Laserpaare stehen dabei in einem definierten Winkel zueinander.

Zur Vermessung von Strömungsgeschwindigkeiten im Bereich von Objekten wie Turbinen, Tragflächen, Spoilern, Rohren usw. werden LDVs, insbesondere Zweistrahl-Laser-Doppler-Systeme (Zweistrahl-LDV) oder Mehrstrahl-LDVs, typischerweise an starren Traversierungs-Systemen mit ein bis drei translatorischen Freiheitsgraden und einem axialen Rotationsfreiheitsgrad angebracht. Somit ist die Positionierung und Orientierung des Messvolumens eines Zweistrahl-LDVs in maximal vier Freiheitsgraden möglich.

Die Veröffentlichung N. C. Temperley et al. / Flow Measurement and Instrumentation 15 (2004) 155-165 offenbart die Montage eines Mehrstrahl-LDVs auf einem 6-achsigen Roboter, mit welchem die Strömungsgeschwindigkeit von Wasser in einem Durchflussmessgerät ermittelt wird. Die Messung findet dabei aus zwei Richtungen statt, wobei die Winkelhalbierenden der beiden Laserpaare entweder parallel zur x-Achse oder parallel zu y-Achse ausgerichtet sind. Das Messvolumen wird dabei in Messpunkten in zuvor festgelegten Ebenen positioniert, wobei die Ebenen mit schwarzen Gummiringen markiert werden. Jeder Messpunkt in der Ebene wird von einer Richtung angefahren (bspw. von +y nach -y und von -z nach +z).

Die Dokumente Bertini et al, EXPERIMENTAL MECHANICS, SPRINGER *NEW YORK LLC, US, Bd. 57, Nr. 2, 17. Oktober 2016,* US 2006/181236 A1 sowie US 2004/125378 A1 offenbaren an einem Roboterarm montierte Messgeräte, jedoch handelt es sich bei den Messgeräten entweder um Laser-Doppler-Vibrometer oder allgemeine Messsysteme, mit welchen eine Strömungsvermessung nicht möglich ist.

Außerdem wird in Chesnakas CJ et al, EXPERIMENTS IN FLUIDS, SPRINGER, HEIDELBERG, DE, Bd. 17, Nr. 1/02, 1. Juni 1994 ein System zur simultanen Vermessung dreier orthogonaler Geschwindigkeitskomponenten eines Bereiches von Strömungsablösung an einem speziellen Rotationsellipsoid in einem Windkanal umfassend ein Laser-Doppler-Velocimeter (LDV) offenbart. Das LDV ist dabei jedoch nicht an einer Kinematik mit zumindest 6-Freiheitsgraden positioniert, sondern an einer 2-Komponenten Traverse montiert, welche eine Verschiebung in axialer und radialer Richtung um $\pm$ 2,5 cm ermöglicht.

Alle aus dem Stand der Technik bekannten Verfahren zur Strömungsvermessung von Fluiden im Bereich einer Objektoberfläche, insbesondere im Nahbereich einer Objektoberfläche, bringen den Nachteil mit sich, dass die Messung in zuvor festgelegten Messpunkten stattfindet, wobei eine räumliche Verschiebung der Objektoberfläche bzw. eine Bewegung der Objektoberfläche nicht berücksichtigt wird. Dieser Nachteil besteht generell, wenn die exakte Positionierung eines Messgerätes oder eines Werkzeuges im Nahbereich einer Objektoberfläche gefordert wird.

Ein weiterer Nachteil besteht darin, dass zur Messung von mehr als einer Geschwindigkeitskomponente einer Strömung in einer Ebene mittels eines Zweistrahl-LDVs mehr als eine Messung in einem Punkt durchgeführt werden muss.

Die Aufgabe der vorliegenden Erfindung besteht deshalb darin, eine Vorrichtung und ein Verfahren bereitzustellen, um die genannten Nachteile zu beseitigen. So kann entweder an (a) vorhanden CAD Daten des (Mess-) Objektes oder an (b) durch vorherige roboterunterstütze Vermessung gewonnenen CAD Daten ein Mess- oder Fertigungsplan zur beliebigen Festlegung von Mess- oder Fertigungspunkten - bzw. deren Position sowie Orientierung - relativ zum (Mess-) Objekt (etwa tangential entlang einer Objektoberfläche) erstellt werden. Diese können zur Durchführung der Messung oder Fertigung auf eine Kinematik übertragen werden.

KURZE BESCHREIBUNG DER ERFINDUNG

Ein wesentlicher Aspekt der zugrundeliegenden Aufgabe wird gelöst durch ein Verfahren gemäß Anspruch 1 zum Abfahren zumindest einer Bahnkurve (B) im Nahbereich einer Objektoberfläche (O) und zur Strömungsvermessung von Fluiden im Nahbereich der Objektoberfläche mit einem auf einer parallelen oder seriellen Kinematik mit zumindest 6 Freiheitsgraden befestigten Laser-Doppler-Velocimeter (LDV), wobei zumindest eine Steuer- oder Regeleinrichtung vorhanden ist, welche Geometrie-Daten der Objektoberfläche (O) enthält, wobei aus den Geometrie-Daten die Orientierung des Laser-Doppler-Velocimeters (2) entlang zumindest einer Bahnkurve (B) definiert wird,

wobei die zumindest eine Steuer- oder Regeleinrichtung die parallele oder serielle Kinematik mit zumindest sechs Freiheitsgraden (1) steuert,
wobei das LDV zumindest ein sich kreuzendes Laserstrahl-Paar aufweist, wobei der gemeinsame Schnittpunkt des zumindest einen Laserstrahl-Paares ein Messvolumen bildet, wobei das Messvolumen zumindest ein Interferenzmuster mit Interferenzstreifen aufweist, wobei die Interferenzstreifen parallel zur Winkelhalbierenden des zumindest einen Laserstrahlpaares ausgerichtet sind, wobei das nacheinander in den sämtlichen Punkten $P_i'$ mit $i = 1, ...,N$ positioniert wird, wobei in den Punkten $P_i'$ die Geschwindigkeit einer Fluidströmung gemessen wird, wobei die Punkte $P_i'$ jeweils in einem bestimmten Abstand $a_i$ zur Objektoberfläche auf einer Linien $L_i$ liegen, wobei die Linien $L_i$ jeweils orthogonal auf die Tangentialebenen $T_i$ der sich auf der Objektoberfläche (O) befindlichen Punkte $P_i$ liegen (mit $P_i \neq P_{i+j}, j \in \{1,...,N\}$) und die Punkte $P_i$ auf den Linien $L_i$ liegen, wobei die Winkelhalbierende des zumindest einen Laserstrahl-Paares stets im Wesentlichen orthogonal zu den Tangentialebenen $T_i$ der Punkte $P_i$ für $i = 1, ...,N$ positioniert wird.

Bevorzugt ist vorgesehen, dass in den Punkten $P_i'$ $(i = 1, ...,N)$ der Betrag der resultierenden Geschwindigkeit $\vec{v}_i$ einer Fluidströmung gemessen wird, wobei die resultierende Geschwindigkeit abhängig von der Orientierung des

$$|\vec{v}_i| = \sqrt{v_{x_i}^2 + v_{y_i}^2} \qquad |\vec{v}_i| = \sqrt{v_{x_i}^2 + v_{z_i}^2} \qquad |\vec{v}_i| = \sqrt{v_{y_i}^2 + v_{z_i}^2}$$

Messvolumens durch $\qquad$ oder $\qquad$ oder $\qquad$ gegeben ist, wobei $v_{x_i}$, $v_{y_i}$ und $v_{z_i}$ die Geschwindigkeitskomponenten der Fluidströmung in die drei Raumrichtungen bezeichnen. Für die Messung in den Punkten $P_i'$ kann vorgesehen sein, dass zunächst die Koordinaten $x_i$, $y_i$, $z_i$ von Punkten $P_i$ auf der Objektoberfläche direkt aus einem bestehenden Geometrie-Modell, wie zum Beispiel einem CAD-Modell, extrahiert werden oder durch eine Methode zur Erfassung von 3D-Objektoberflächen ermittelt werden. Aufgrund der daraus gewonnenen Kenntnis über die Geometrie der Objektoberfläche, können die Koordinaten $x_i'$, $y_i'$, $z_i'$ von Punkten $P_i'$ in einem Abstand $a_i$ zur Objektoberfläche ermittelt werden.

In einer Ausführungsvariante ist vorgesehen, dass die Ermittlung der Koordinaten $x_i$, $y_i$, $z_i$ sämtlicher Punkte $P_i$ auf der Objektoberfläche zeitlich unmittelbar vor der Strömungsmessung geschieht.

Mit "zeitlich unmittelbar vor der Strömungsvermessung" ist gemeint, dass die Zeit zwischen der Ermittlung der Koordinaten sämtlicher Punkte $P_i$ und der Strömungsvermessung bzw. der Geschwindigkeitsvermessung einer Strömung in diesen Punkten durch die benötigte Zeit für die Datenverarbeitung und für die Weiterleitung der Daten (Koordinateninformation) an die parallele oder serielle Kinematik beschränkt ist.

Besonders bevorzugt ist vorgesehen, dass die Ermittlung der Koordinaten $x_i$, $y_i$, $z_i$ sämtlicher Punkte $P_i$ und/oder die Registrierung einer Veränderung der Koordinaten $x_i$, $y_i$, $z_i$ sämtlicher Punkte $P_i$ in Echtzeit, d.h. im Wesentlichen während des (Geschwindigkeits-)Messprozesses, stattfindet. Diesen Verfahrensvarianten ist gemein, dass aus den gewonnen Koordinaten $x_i$, $y_i$, $z_i$ die Koordinaten $x_i'$, $y_i'$, $z_i'$ von Punkten $P_i'$ in einem Abstand $a_i$ zur Objektoberfläche, insbesondere unmittelbar darauffolgend, ermittelt werden.

Die Messung der Geschwindigkeit einer Fluidströmung wird im Wesentlichen in jedem Punkt $P_i'$ genau einmal durchgeführt, wodurch ein die Fluidströmung beschreibendes Vektorfeld **F** generiert wird.

Um die exakte Positionierung des Messvolumens in einem Punkt $P_i'$ zu garantieren, ist vorgesehen, dass der Tool Center Point (TCP) des LDVs mittels einer Kalibriereinheit ermittelt wird, wobei der TCP des LDVs die translatorische und rotatorische Verschiebung relativ zum Mittelpunkt der Werkzeugaufnahme einer parallelen oder seriellen Kinematik mit zumindest 6 Freiheitsgraden angibt.

Die eingangs gestellte Aufgabe wird außerdem gelöst durch eine Vorrichtung gemäß Anspruch 8 zum Abfahren einer Bahnkurve im Nahbereich der Objektoberfläche, umfassend eine parallele oder serielle Kinematik mit zumindest 6 Freiheitsgraden, insbesondere einen 6-achsigen Industrieroboter, und eine Einrichtung aus der Gruppe der Messgeräte oder der Werkzeuge mit Werkzeugkoordinatensystem, wobei zumindest eine Steuer- oder Regeleinrichtung vorhanden ist, welche Geometrie-Daten der Objektoberfläche enthält, wobei aus den Geometrie-Daten die Orientierung der Einrichtung aus der Gruppe der Messgeräte oder der Werkzeuge entlang der Bahnkurve definiert wird, wobei die Werkzeugachse orthogonal auf die Tangentialebene $T_i$ sämtlicher sich auf der Objektoberfläche befindlicher Punkte $P_i$ ($i$ = 1, ..., $N$) ist.

In einer Ausführungsvariante ist die Steuer- oder Regeleinrichtung in eine zentrale Steuer- oder Regeleinrichtung und eine Steuer- oder Regeleinheit der parallelen oder seriellen Kinematik mit zumindest 6 Freiheitsgraden aufgeteilt. Die zentrale Steuer- oder Regeleinrichtung ist dabei über eine Datenleitung mit der Steuer- oder Regeleinheit der parallelen oder seriellen Kinematik mit zumindest 6 Freiheitsgraden verbunden, wobei die Steuer- oder Regeleinheit die Ausrichtung der Einrichtung aus der Gruppe der Messgeräte oder der Werkzeuge entlang der Bahnkurve steuert. Für die Datenleitungen kann jedes in der Informations- und Kommunikationstechnik übliche physikalische Übertragungsmedium verwendet werden. Auch auf Funk basierende bzw. auf elektromagnetischen Wellen basierende Sender-Empfänger-Übertragungskanäle fallen in diesem Zusammenhang unter den Begriff Datenleitung.

Die Ausrichtung der Einrichtung aus der Gruppe der Messgeräte oder der Werkzeuge wird durch Definition eines Werkzeugkoordinatensystems, dessen Ursprung der TCP ist, ermöglicht. Dabei entspricht die Werkzeugachse, anhand welcher die Orientierung der Einrichtung aus der Gruppe der Messgeräte oder der Werkzeuge definiert wird, der z-Achse des Werkzeugkoordinatensystems. Die Steuer- oder Regeleinrichtung kann somit über die serielle oder parallele Kinematik mit zumindest 6 Freiheitsgraden die Orientierung der Einrichtung gemäß der Werkzeugachse steuern.

In einer weiteren Ausführungsvariante ist vorgesehen, dass die Steuer- oder Regeleinrichtung von einer Einrichtung zur berührungsfreien Erfassung von 3D-Objektoberflächen Daten erhält, wobei aus den erhaltenen Daten ein Geometrie-Modell generiert wird.

Besonders bevorzugt ist vorgesehen, dass die Steuer- oder Regeleinrichtung einen Postprozessor aufweist, wobei der Postprozessor die Anweisungen für die parallele oder serielle Kinematik mit zumindest 6 Freiheitsgraden übersetzt, wobei die Steuer- oder Regeleinrichtung die Aktoren der parallelen oder seriellen Kinematik steuert und/oder regelt und die Bewegung entlang der zumindest einen Bahnkurve vorgibt und/oder überwacht.

In einer Ausführungsvariante generiert eine Datenverarbeitungseinrichtung, beispielsweise ein Computer mit CAD/CAM-Software, ein Geometrie-Modell, insbesondere ein CAD-Modell. Aus diesem Modell kann beispielsweise mittels CAM-Software oder einer Software wie MATLAB ein Ablaufplan in Form eines Programms erstellt werden. Ein Postprozessor übersetzt diesen Ablaufplan in ein weiteres Programm (bzw. das bestehende Programm in eine andere Programmiersprache), welches die Steuer- oder Regeleinheit der parallelen oder seriellen Kinematik mit zumindest 6 Freiheitsgraden verarbeiten kann.

Bevorzugt ist die Einrichtung aus der Gruppe der Messgeräte oder der Werkzeuge ein LDV. Das LDV ist besonders bevorzugt als Zweistrahl-Laser-Doppler-System ausgeführt. In einer Variante kann es auch als Mehrstrahl-Laser-Doppler-System ausgebildet sein. Zur Bestimmung des TCP des LDVs kann vorgesehen sein, dass eine erfindungsgemäße Vorrichtung eine Kalibriereinheit für das LDV aufweist, wobei die Kalibriereinheit einen Bildsensor aufweist.

Der TCP des LDVs gibt dabei die translatorische und rotatorische Verschiebung relativ zum Mittelpunkt der Werkzeugaufnahme der parallelen oder seriellen Kinematik mit zumindest 6 Freiheitsgraden an. In einer Ausführungsvariante ist für die Einrichtung aus der Gruppe Messgeräte oder Werkzeuge ein Laserschneidgerät, ein Schweißgerät, eine Klebepistole, eine Lackierpistole und dergleichen vorgesehen.

Bevorzugt ist vorgesehen, dass die Einrichtung zur Erfassung einer 3D-Objektoberfläche eine 3D-Scaneinheit, insbesondere 3D-Laserscaneinheit, ist. Alternativ kann zur Erfassung der 3D-Objektoberfläche zumindest eine Kamera, insbesondere zumindest eine Digitalkamera für Photogrammetrie, vorgesehen sein.

Bevorzugt wird die Objektoberfläche mit einer Einrichtung zur berührungsfreien Erfassung einer 3D-Objektoberfläche detektiert, wodurch eine dreidimensionale Punktwolke entsprechend der Objektoberfläche gewonnen wird, wobei die Punkte $P_i$ auf einer Objektoberfläche einem Koordinatensystem zugeordnet werden und dabei jedem Punkt $P_i$ Koordinaten $x_i$, $y_i$, $z_i$ zugeordnet werden. Bevorzugt werden aus den gewonnen Koordinaten $x_i$, $y_i$, $z_i$ von Punkten $P_i$ auf einer Objektoberfläche die Koordinaten $x_i'$, $y_i'$, $z_i'$ von Punkten $P_i'$ in einem Abstand $a_i$ zur Objektoberfläche ermittelt, wobei zwischen Punkten $P_i'$ interpoliert wird.

In einer Ausführungsvariante ist vorgesehen, dass mit der Einrichtung zur Erfassung einer 3D-Objektoberfläche eine Bewegung der Objektoberfläche im Wesentlichen in Echtzeit detektiert wird.

KURZE BESCHREIBUNG DER ZEICHNUNGEN

Fig. 1   zeigt eine erfindungsgemäße Vorrichtung zum Abfahren einer Bahnkurve B im Nahbereich der Objektoberfläche O.

Fig. 2   zeigt schematisch zwei sich kreuzende Laserstrahlen $l_1$, $l_2$. Der Kreuzungspunkt bzw. Schnittpunkt S bildet ein Messvolumen M.

Fig. 3   zeigt ein Objekt mit einer Objektoberfläche O. Zur Illustration sind drei Messpunkte $P_i'$ (mit i = 1, 2, 3) entlang einer Bahnkurve B gezeigt.

## DETAILLIERTE BESCHREIBUNG DER ERFINDUNG

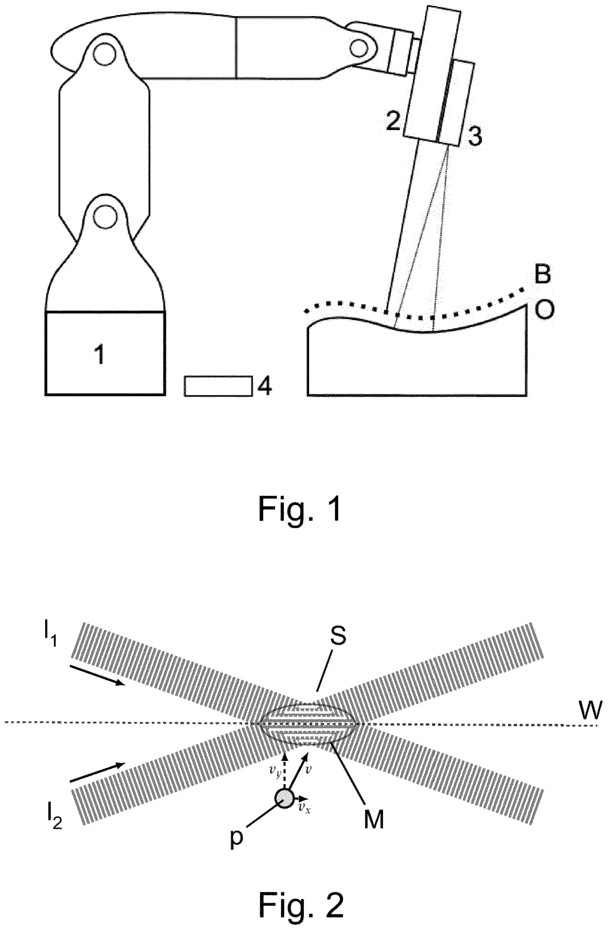

In Fig. 1 ist eine erfindungsgemäße Vorrichtung zum Abfahren einer Bahnkurve B im Nahbereich der Objektoberfläche O und zur Detektion einer Objektoberfläche O gezeigt. Die exemplarisch dargestellte Ausführungsvariante einer erfindungsgemäßen Vorrichtung weist eine serielle Kinematik 1 mit sechs Freiheitsgraden, ein LDV 2, eine Einrichtung zur berührungsfreien Erfassung von 3D-Objektoberflächen 3 und eine Kalibriereinheit 4 auf.

Die parallele oder serielle Kinematik ist vorzugsweise ein 6-achsiger Industrieroboter, beispielsweise vom Typ "*ABB IRB 1200-7/0.7*", wobei eine erfindungsgemäße Vorrichtung natürlich nicht auf diesen speziellen Industrieroboter einzugrenzen ist. Eine Positionierung eines Werkzeuges oder eines Messgerätes ist an einem beliebigen Ort innerhalb des Arbeitsraums des Industrieroboters möglich, und die Steuer- oder Regeleinheit des Industrieroboters die Aktoren (Motoren der einzelnen Stellglieder) steuert bzw. regelt. Folglich kann immer eine gewünschte Position und Orientierung eines Werkzeugs bzw. Messgerätes relativ zum (Mess-) Objekt erreicht werden. Die Reichweite eines solchen Industrieroboters beträgt rund 0,7 m bei einer Positioniergenauigkeit von 20 µm, jedoch ist der Einsatz von Industrierobotern mit Reichweiten von mehreren Metern, beispielsweise von bis zu 3,5 m, denkbar.

Im Text werden die Begriffe "parallele oder serielle Kinematik mit 6 Freiheitsgraden", "6-achsiger Industrieroboter" und "Industrieroboter" zugunsten der Lesbarkeit synonym verwendet. Ebenso werden die Begriffe "3D-Objektoberfläche" und "Objektoberfläche" synonym verwendet.

Ein Messgerät 2 kann ein LDV vom Typ "*ILA Fp50 shift*" sein, wobei eine erfindungsgemäße Vorrichtung beliebige Typen von LDVs sowie jegliche Art von Messgerät oder Werkzeug aufweisen kann. Beim genannten Typ eines LDVs handelt es sich um ein Zweistrahl-LDV, wobei die beiden Laser $l_1$, $l_2$ Licht einer Wellenlänge von 532 nm bei einer Leistung von 100 mW emittieren. Mit einem solchen LDV können Partikel- bzw. Strömungsgeschwindigkeiten von 0,01 bis 150 m/s bei einem relativen Fehler von 0,3% gemessen werden.

Ein Messgerät 2 wie ein LDV oder ein Werkzeug wird am von der Basis der seriellen Kinematik entferntesten Glied angebracht. Als Werkzeugaufnahme können gängige Vorrichtungen und Befestigungsmittel für Industrieroboter-Werkzeugflansche zum Einsatz kommen. Am Beispiel eines LDVs kann eine Profilschiene aus beispielsweise Aluminium am Werkzeugflansch des Industrieroboters angebracht werden. Diese Profilschiene kann extrudiert sein und Nuten aufweisen. An einer solchen Profilschiene kann ein LDV befestigt werden, wobei die Lage des LDV entlang der Profilschiene justierbar ist.

In einer Ausführungsvariante, die eine Einrichtung zur berührungsfreien Erfassung von 3D-Objektoberflächen 3 aufweist, kann diese beispielsweise eine 3D-Scaneinrichtung oder mehrere 3D-Scaneinrichtungen sein, insbesondere eine 3D-Laserscaneinrichtung, sein. Ebenso ist denkbar, dass die Einrichtung zur berührungsfreien Erfassung von 3D-Objektoberflächen aus zumindest einer Kamera besteht. Beispielsweise können die 3D-Objektoberflächen Fotogrammetrisch analysiert werden.

Eine solche Einrichtung zur berührungsfreien Erfassung von Objektoberflächen 3 ist über eine Datenleitung mit einer (nicht dargestellten) Datenverarbeitungseinrichtung, beispielsweise einem Computer, verbunden. Der Computer ruft Daten von der Einrichtung zur berührungsfreien Erfassung von Objektoberflächen 3 ab, verarbeitet die erfassten Daten mit einer dafür vorgesehenen und bekannten Software, wodurch ein 3D-Geometrie-Modell bzw. ein 3D-CAD-Modell entsteht und leitet die Daten an die Steuer- oder Regeleinheit des 6-achsigen Industrieroboters weiter.

Je nach Ausführungsvariante wird nun entweder wie oben beschrieben zuvor ein Geometrie-Modell erstellt oder die Steuer- und Regeleinrichtung der parallelen oder seriellen Kinematik enthält schon im Vorhinein ein Geometrie-Modell. Aus dem Geometrie-Modell kann mit bekannter Software bzw. mit bekannten Techniken, zum Beispiel mit CAM-Software (computer-aided manufacturing-Sofware) oder einer kommerziellen Software wie bspw. MATLAB eine Art Ablaufplan erstellt werden, mit welchem festgelegt wird, entlang welcher Bahnkurve bzw. entlang welchen Bahnkurven ein Werkzeug oder Messgerät entlang der 3D-Objektoberfläche navigiert wird (Offline-Programmierung). Der ermittelte Ablaufplan wird dann von einem Postprozessor in ein für die Steuer- oder Regeleinheit verarbeitbares Programm übersetzt und über eine Datenleitung an die (nicht dargestellte) Steuer- oder Regeleinheit des 6-achsigen Industrieroboters übergeben. Durch die Ansteuerung der Aktoren des Industrieroboters sowie die Überwachung der Ist-Position und Vergleich mit der Soll-Position durch die Regelung wird letztlich die Bahnführung entlang der entsprechenden 3D-Objektoberfläche ermöglicht.

Zur Ermittlung des TCP eines Werkzeuges oder eines Messgerätes dient eine Kalibriereinheit 4. Im Falle der Verwendung eines LDVs 2 bzw. eines Zweistrahl-LDVs kann eine solche Kalibriereinheit 4 im Wesentlichen aus einem CCD-Sensor einer handelsüblichen Digitalkamera bestehen. Um die Zerstörung der Sensor-Pixel zu vermeiden, kann das Laserlicht vor Auftreffen auf den Sensor durch Filter abgeschwächt werden.

Das Prinzip der Kalibrierung besteht im Wesentlichen darin, den Industrieroboter 1 mit dem LDV 2 solange zu bewegen, bis die Fläche des Schnittpunktes der beiden Laser l1, l2, d.h. die Projektionsfläche des Schnittpunktes S bzw. des Messvolumens M auf den CCD-Sensor, minimal wird, wobei die Winkelhalbierende W der sich kreuzenden Laserstrahlen idealerweise orthogonal auf den CCD-Sensor steht. Durch die dadurch gewonnene Kenntnis über die Position des LDVs relativ zur Kalibriereinheit - die Position der Kalibriereinheit 3 relativ zum Koordinatenursprung ist bereits bekannt - kann der TCP ermittelt werden. Die Kalibriereinheit 4 kann dabei, wie in Fig. 1 gezeigt, direkt am Industrieroboter, bevorzugt an seiner Basis, angebracht sein.

Eine Kalibriereinheit 4 kann in einer anderen Ausführung auch an einer beliebigen Position innerhalb des Arbeitsraums der parallelen oder seriellen Kinematik positioniert sein. Mehr bevorzugt wird der das Laserlicht abschwächende Filter an besagter Profilschiene und die Kalibriereinheit 4 in einem Bereich im Arbeitsraum des Industrieroboters angebracht.

In Fig. 2 sind zwei sich kreuzende Laser $l_1$, $l_2$ schematisch dargestellt. Der Schnittpunkt S bildet dabei das Messvolumen, in welchem ein Interferenzmuster in Form von Interferenzstreifen ausgebildet wird. Im Falle, dass die beiden Laser $l_1$, $l_2$ Licht der selben Wellenlänge emittieren, ist das Interferenzmuster statisch, wobei die Interferenzstreifen im Wesentlichen parallel zur Winkelhalbierenden W der beiden sich kreuzenden Laser $l_1$, $l_2$ orientiert sind.

Ein das Messvolumen durchlaufendes Partikel p mit einer resultierenden Geschwindigkeit $\vec{v}$ streut das Licht der Interferenzstreifen periodisch mit der Signal-Frequenz $f_S$, welche proportional zur Geschwindigkeitskomponente des Partikels p orthogonal zu den Interferenzstreifen ist (Gleichung 4).

Im speziellen Fall, in dem ein Partikel p die Interferenzstreifen orthogonal passiert, wird der Betrag der resultierenden Geschwindigkeit $\vec{v}$, also $|\vec{v}|$ gemessen. Wird das Messvolumen sequentiell in verschiedenen Punkten $P_i{}'$ positioniert, so kann der Betrag der resultierenden Geschwindigkeit $|\vec{v_i}|$ im entsprechenden Punkt gemessen werden. Aus allen Messungen kann dann ein Vektorfeld F generiert werden. Das Vektorfeld enthält die Information der Geschwindigkeit einer Fluidströmung in einem Bereich, welcher durch die Verteilung der Punkte $P_i{}'$ festgelegt ist.

Ein großer Vorteil der Messung des Betrags der resultierenden Geschwindigkeit $|\vec{v_i}|$ eines Partikels p in einem Punkt $P_i{}'$ ist, dass über geometrische Zusammenhänge (Satz des Pythagoras) die entsprechenden Geschwindigkeitskomponenten $v_{x_i}$ und $v_{y_i}$ ermittelt werden können. Dadurch ist es also möglich, mit einer einzigen Messung in einem Punkt $P_i{}'$ zwei Geschwindigkeitskomponenten $v_{x_i}$ und $v_{y_i}$ zu ermitteln. Mit einem Mehrstrahl-LDV können auch drei Geschwindigkeitskomponenten $v_{x_i}$, $v_{y_i}$ und $v_{y_i}$ ermittelt werden, wobei die Winkelhalbierenden von beispielsweise zweier Zweistrahl-LDVs denkungsgleich sein können und die Interferenzstreifenmuster der jeweiligen Messvolumina idealerweise orthogonal aufeinander stehen.

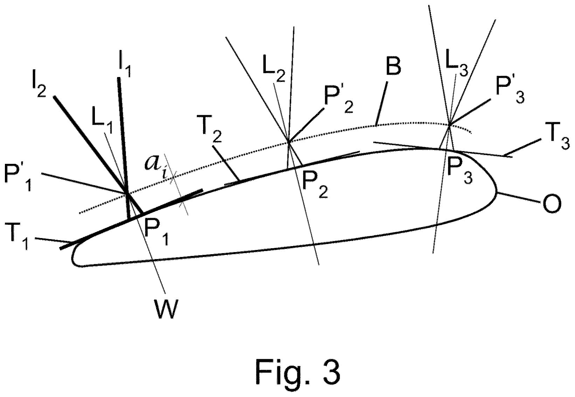

In Fig. 3 ist als Objekt exemplarisch eine Tragfläche im Schnitt dargestellt. Die Tragfläche weist eine Objektoberfläche O auf. Zur Illustration sind drei Punkte $P_1$, $P_2$, $P_3$ auf der Objektoberfläche O dargestellt. Über die Richtungsableitungen in den Punkten $P_1$, $P_2$, $P_3$ können die entsprechenden Tangentialebenen $T_1$, $T_2$, $T_3$ ermittelt werden. Zur Ermittlung einer einzelnen Tangente in den Punkten $P_1$, $P_2$, $P_3$ ist eine Richtungsableitung ausreichend.

Aus dem Geometrie-Modell der Objektoberfläche, beispielsweise jenes der Tragfläche aus Fig.3, kann mittels aus dem Stand der Technik bekannter Software (bspw. einer CAM-Software) ein Ablaufplan in Form von Programmen (z.B. NC-Programme) erstellt werden, wodurch festgelegt wird, entlang welcher Bahnkurve ein Werkzeug und/oder ein Messwerkzeug navigiert werden soll. Dabei kann neben der zu folgenden Bahnkurve auch festgelegt werden, welche räumliche Orientierung ein Werkzeug und/oder Messgerät in einem bestimmten Punkt $P_i{}'$ aufweisen soll. Die Orientierung wird über das Werkzeugkoordinatensystem definiert, wobei die z-Achse dieses Koordinatensystems der Werkzeugachse entspricht, welche die Orientierung bestimmt.

Im Falle einer Geschwindigkeitsvermessung einer Fluidströmung im Nahbereich der Objektoberfläche O wird der Schnittpunkt S bzw. das Messvolumen M zweier sich kreuzenden Laserstrahlen $l_1$, $l_2$ eines Zweistrahl-LDVs gemäß eines Ablaufplans (sequentiell) in den Punkten $P_1{}'$, $P_2{}'$, $P_3{}'$ positioniert, wobei die Punkte $P_1{}'$, $P_2{}'$, $P_3{}'$ in entsprechenden Abständen $a_1$, $a_2$, $a_3$ zur Objektoberfläche O und auf den entsprechenden Linien $L_1$, $L_2$, $L_3$ lokalisiert sind, wobei die von der Objektoberfläche beabstandeten Punkte $P_1{}'$, $P_2{}'$, $P_3{}'$ und die auf der Objektoberfläche liegenden Punkte $P_1$, $P_2$, $P_3$ auf den Linien $L_1$, $L_2$, $L_3$ liegen, wobei die Winkelhalbierende W der beiden Laserstrahlen $l_1$, $l_2$ in jedem der Punkte $P_1$, $P_2$, $P_3$ deckungsgleich mit den entsprechenden Linien $L_1$, $L_2$, $L_3$ ist, wobei die Winkelhalbierende W in jedem der Punkte $P_1$, $P_2$, $P_3$ jeweils im Wesentlichen orthogonal zur entsprechenden Tangentialebene $T_1$, $T_2$, $T_3$ steht. Es gilt zu beachten, dass nur jene Punkte und Linien mit demselben Index zusammengehörend sind.

Durch Interpolation zwischen den Punkten $P_1{}'$, $P_2{}'$, $P_3{}'$ kann eine Bahnkurve B ermittelt werden. Die Bahnkurve B ist im Wesentlichen parallel und in einem gewissen Abstand zur Objektoberfläche O verlaufend. Die Bahnkurve B kann im Nahbereich der Objektoberfläche O jedoch auch beliebig verlaufen, d.h. der Abstand $a_i$ der zu interpolierenden Punkte von der Objektoberfläche kann variieren.

Die Objektoberfläche selbst wird durch die Punkte $P_i$ ($i = 1, ...,N$) beschrieben, wobei die Punkte $P_i$ entweder aus einem bestehenden Geometrie-Modell oder mittels einer Einrichtung zur berührungsfreien Erfassung von 3D-Objektoberflächen wie oben beschrieben ermittelt werden. Eine Datenverarbeitungseinrichtung, beispielsweise ein Computer mit bekannter Software bzw. CAD-Software, ordnet jeden Punkt $P_i$ einem Koordinatensystem zu. Anders ausgedrückt werden die Koordinaten $x_i$, $y_i$, $z_i$ eines jeden Punktes $P_i$ einem Koordinatensystem zugeordnet. Ein solches Koordinatensystem ist bevorzugt kartesisch. Alternativ kann die Beschreibung der Punkte $P_i$ in einem Polarkoordinaten- bzw. Zylinderkoordinatensystem oder einem Kugelkoordinatensystem vorgesehen sein.

Mit den dadurch gewonnen Daten, können die Punkte $P_i'$ in einem Abstand $a_i$ zu den auf der Objektoberfläche liegenden Punkten $P_i$ festgelegt werden, wobei die Bahnkurve B der Interpolationsfunktion zwischen den Punkten $P_i'$ entspricht.

Befindet sich die Objektoberfläche hinter einer optisch transparenten Objekteinhausung, kann es sein, dass die Messpunkte $P_i'$ nicht mehr die gewünschte Position und Orientierung relativ zur Objektoberfläche aufweisen. Bei der Objekteinhausung kann es sich beispielsweise um einen eckigen oder rohrförmigen Windkanal aus optisch transparenten Material handeln. Die optisch transparente Objekteinhausung verursacht optische Brechungen, unter anderem der Laserstrahlen des LDVs. In einer bevorzugten Ausführungsvariante wird daher die optische Brechung einer vorhandenen Objekteinhausung in der Planung bzw. während der Durchführung der Messung berücksichtigt. Dadurch kann die Ausrichtung des LDVs entsprechend korrigiert werden.

Die Geometrie bzw. die optischen Eigenschaften der Objekteinhausung, deren Kenntnis zur entsprechenden Ausrichtung der LDVs notwendig ist, kann entweder bekannt sein oder mithilfe der LDVs und einer Kinematik vorab bestimmt werden.

In einer Ausführungsvariante wird mit einem erfindungsgemäßen Verfahren die Bewegung einer zu vermessenden Objektoberfläche im Wesentlichen in Echtzeit erfasst, wodurch die Bahnkurve im Wesentlichen in Echtzeit an die Bewegung angepasst werden kann.

Es hat sich gezeigt, dass durch die Notwendigkeit lediglich einer einzigen Messung in einem bestimmten Punkt $P_i'$ eine adaptive bzw. dynamische Anpassung der Bahnkurve B für Objektoberflächen in Bewegung (z.B. schwingende oder sich drehende Tragfläche) möglich ist. Dies ist für herkömmliche Messmethoden, bei welchen die Geschwindigkeitskomponenten über zwei Messungen in einem Punkt $P_i'$ (bei unterschiedlicher Orientierung des Messvolumens) ermittelt werden, nicht oder nur begrenzt möglich, da sich die Position des entsprechenden Punktes $P_i'$ relativ zum Koordinatensystem zwischen den Messungen ändert. Folglich ist die Messung nach herkömmlichen Methoden fehlerbehaftet.

**Patentansprüche**

1. Verfahren zum Abfahren zumindest einer Bahnkurve (B) im Nahbereich einer Objektoberfläche (O) und zur Strömungsvermessung von Fluiden im Nahbereich der Objektoberfläche (O) mit einem auf einer parallelen oder seriellen Kinematik mit zumindest 6 Freiheitsgraden (1) befestigten Laser-Doppler-Velocimeter (2),

   wobei zumindest eine Steuer- oder Regeleinrichtung vorhanden ist, welche Geometrie-Daten der Objektoberfläche (O) enthält, wobei aus den Geometrie-Daten die Orientierung des Laser-Doppler-Velocimeters (2) entlang zumindest einer Bahnkurve (B) definiert wird,
   wobei die zumindest eine Steuer- oder Regeleinrichtung die parallele oder serielle Kinematik mit zumindest sechs Freiheitsgraden (1) steuert,
   wobei das Laser-Doppler-Velocimeter zumindest ein sich kreuzendes Laserstrahl-Paar ($l_1$, $l_2$) bildet, wobei der gemeinsame Schnittpunkt (S) des zumindest einen Laserstrahl-Paares ein Messvolumen (M) bildet, wobei das Messvolumen (M) zumindest ein Interferenzmuster mit Interferenzstreifen aufweist, wobei die Interferenzstreifen parallel zur Winkelhalbierenden (W) des zumindest einen Laserstrahlpaares ausgerichtet sind, wobei das Messvolumen (M) nacheinander in den sämtlichen Punkten $P_i'$ mit i = 1, ...,N positioniert wird, wobei in den Punkten $P_i'$ die Geschwindigkeit einer Fluidströmung gemessen wird, wobei die Punkte $P_i'$ jeweils in einem bestimmten Abstand ($a_i$) zur Objektoberfläche (O) auf Linien $L_i$ liegen, wobei die Linien $L_i$ jeweils orthogonal auf die Tangentialebenen $T_i$ der sich auf der Objektoberfläche (O) befindlichen Punkte $P_i$ liegen (mit $P_i \neq P_{i+j}$, $j \in \{1, ..., N\}$) und die Punkte $P_i$ jeweils auf den Linien $L_i$ liegen, wobei die Winkelhalbierende (W) des zumindest einen Laserstrahl-Paares ($l_1$, $l_2$) stets im Wesentlichen orthogonal zu den Tangentialebenen $T_i$ der Punkte $P_i$ für i = 1, ..., N positioniert wird.

2. Verfahren nach Anspruch 1, **dadurch gekennzeichnet, dass** in jedem Punkt $P_i'$ (i = 1, ..., N) der Betrag der resultierenden Geschwindigkeit $\vec{v}_i$ einer Fluidströmung gemessen wird, wobei die resultierende Geschwindigkeit abhängig von der Orientierung des Messvolumens (M) durch $|\vec{v}_i| = \sqrt{v_{x_i}^2 + v_{y_i}^2}$ oder $|\vec{v}_i| = \sqrt{v_{x_i}^2 + v_{z_i}^2}$ oder

$|\vec{v}_i| = \sqrt{v_{y_i}^2 + v_{z_i}^2}$ gegeben ist, wobei $v_{x_i}$, $v_{y_i}$ und $v_{z_i}$ die Geschwindigkeitskomponenten der Fluidströmung in drei Raumrichtungen ($x, y, z$) bezeichnen.

3. Verfahren nach Anspruch 1, **dadurch gekennzeichnet, dass** die Koordinaten $x_i$, $y_i$, $z_i$ von sämtlichen Punkten $P_i$ auf der Objektoberfläche (O) durch Extraktion aus einem bestehenden Geometrie-Modell ermittelt werden.

4. Verfahren nach Anspruch 1, **dadurch gekennzeichnet, dass** die Koordinaten $x_i$, $y_i$, $z_i$ von sämtlichen Punkten $P_i$ auf der Objektoberfläche (O) durch eine Methode zur Erfassung von 3D-Objektoberflächen ermittelt werden.

5. Verfahren nach einem der Ansprüche 1 bis 4, **dadurch gekennzeichnet, dass** der Tool Center Point, TCP, des Laser-Doppler-Velocimeters mittels einer Kalibriereinheit (4) ermittelt wird, wobei der TCP des Laser-Doppler-Velocimeters die translatorische und rotatorische Verschiebung relativ zum Mittelpunkt der Flanschplatte einer parallelen oder seriellen Kinematik mit zumindest 6 Freiheitsgraden (1) angibt.

6. Verfahren nach einem der Ansprüche 1 bis 5, wobei die Objektoberfläche (O) mit einer Einrichtung zur berührungsfreien Erfassung einer 3D-Objektoberfläche (3) detektiert wird, wodurch eine dreidimensionale Punktwolke entsprechend der Objektoberfläche (O) gewonnen wird, **dadurch gekennzeichnet, dass** eine Steuer- oder Regeleinrichtung sämtliche Punkte $P_i$ der dreidimensionalen Punktwolke der Objektoberfläche (O) einem Koordinatensystem zuordnet und dabei jedem Punkt $P_i$ Koordinaten $x_i$, $y_i$, $z_i$ zugeordnet werden, wobei aus den gewonnen Koordinaten $x_i$, $y_i$, $z_i$ die Koordinaten $x_i'$, $y_i'$, $z_i'$ von Punkten $P_i'$ in einem Abstand ($a_i$) zur Objektoberfläche (O) ermittelt werden, wobei zwischen Punkten $P_i'$ zur Ermittlung einer Bahnkurve (B) im Nahbereich der Objektoberfläche (O) interpoliert wird.

7. Verfahren nach Anspruch 6, **dadurch gekennzeichnet, dass** mit der Einrichtung zur Erfassung einer 3D-Objektoberfläche (3) eine Bewegung der Objektoberfläche (O) im Wesentlichen in Echtzeit detektiert wird.

8. Vorrichtung zum Abfahren zumindest einer Bahnkurve (B) und zur Strömungsvermessung von Fluiden im Nahbereich einer Objektoberfläche (O), umfassend

    - eine parallele oder serielle Kinematik mit zumindest sechs Freiheitsgraden (1), insbesondere einen sechsachsigen Industrieroboter,
    - ein Laser-Doppler-Velocimeter mit einem Werkzeugkoordinatensystem und zumindest einem sich kreuzenden Laserstrahl-Paar ($l_1$, $l_2$),
    - zumindest eine Steuer- oder Regeleinrichtung, welche Geometrie-Daten der Objektoberfläche (O) enthält, und die dazu eingerichtet ist, aus den Geometrie-Daten die Orientierung des Laser-Doppler-Velocimeters (2) entlang zumindest einer Bahnkurve (B) zu definieren,
    wobei die zumindest eine Steuer- oder Regeleinrichtung dazu eingerichtet ist, die parallele oder serielle Kinematik mit zumindest sechs Freiheitsgraden (1) zu steuern,
    wobei das Laser-Doppler-Velocimeter dazu eingerichtet ist, zumindest das sich kreuzende Laserstrahl-Paar ($l_1$, $l_2$) zu bilden, wobei der gemeinsame Schnittpunkt (S) des zumindest einen Laserstrahl-Paares ein Messvolumen (M) bildet, wobei das Messvolumen (M) zumindest ein Interferenzmuster mit Interferenzstreifen aufweist, wobei die Interferenzstreifen parallel zur Winkelhalbierenden (W) des zumindest einen Laserstrahlpaares ausgerichtet sind,
    wobei die Vorrichtung dazu eingerichtet ist,

        - das Messvolumen (M) nacheinander entlang der mindestens einen Bahnkurve (B) in den sämtlichen Punkten $P_i'$ mit $i = 1, ..., N$ zu positionieren, und
        - in den Punkten $P_i'$ die Geschwindigkeit einer Fluidströmung zu messen,

    wobei die Punkte $P_i'$ jeweils in einem bestimmten Abstand ($a_i$) zur Objektoberfläche (O) auf Linien $L_i$ liegen, wobei die Linien $L_i$ jeweils orthogonal auf die Tangentialebenen $T_i$ der sich auf der Objektoberfläche (O) befindlichen Punkte $P_i$ liegen (mit $P_i \neq P_{i+j}$, $j \in \{1, ..., N\}$) und die Punkte $P_i$ jeweils auf den Linien $L_i$ liegen, und

wobei die Winkelhalbierende (W) des zumindest einen Laserstrahl-Paares (I$_1$, I$_2$) stets im Wesentlichen orthogonal zu den Tangentialebenen T$_i$ der Punkte P$_i$ für i = 1, ..., N positioniert wird.

9. Vorrichtung nach Anspruch 8, **dadurch gekennzeichnet, dass** die Steuer- oder Regeleinrichtung von einer Einrichtung zur berührungsfreien Erfassung von 3D-Objektoberflächen (3) Daten erhält, wobei aus den erhaltenen Daten ein Geometrie-Modell generiert wird.

10. Vorrichtung nach Anspruch 9, **dadurch gekennzeichnet, dass** die Einrichtung zur Erfassung einer 3D-Objektoberfläche (3) entweder eine 3D-Scaneinheit, vorzugsweise eine 3D-Laserscaneinheit, oder eine Kamera, vorzugsweise zumindest eine Digitalkamera, aufweist.

11. Vorrichtung nach einem der Ansprüche 8 bis 10, **dadurch gekennzeichnet, dass** die Steuer- oder Regeleinrichtung einen Postprozessor aufweist, wobei der Postprozessor dazu eingerichtet ist, die Anweisungen für die parallele oder serielle Kinematik mit zumindest sechs Freiheitsgraden (1) zu übersetzen, wobei die Steuer- oder Regeleinrichtung dazu eingerichtet ist, die Aktoren der parallelen oder seriellen Kinematik zu steuern und/oder regeln und die Bewegung entlang der zumindest einen Bahnkurve (B) vorzugeben und/oder zu überwachen.

12. Vorrichtung nach einem der Ansprüche 8 bis 11, **gekennzeichnet durch** eine Kalibriereinheit (4) für das Laser-Doppler-Velocimeter (2), wobei die Kalibriereinheit (4) einen CCD-Sensor aufweist.

**Claims**

1. A method for moving a trajectory (B) in the vicinity of a subject surface (O) and for flow measurement of fluids in the vicinity of an object surface (O) using a Doppler laser velocimeter (2) mounted on a parallel or serial kinematic system with at least 6 degrees of freedom (1), wherein there is present at least one control or regulation device, which contains geometry data of the object surface (O), wherein there is defined on the basis of the geometry data the orientation of the Doppler laser velocimeter along at least one trajectory (B), wherein the at least one control or regulation device controls the parallel or serial kinematic system with at least six degrees of freedom (1), wherein the Doppler laser velocimeter forms at least one intersecting laser beam pair (I$_1$, I$_2$), wherein the common intersection point (S) of the at least one pair of laser beams forms a measurement volume (M), wherein the measurement volume (M) has at least one interference pattern with interference fringes, wherein the interference fringes are aligned in parallel to the angle bisector (W) of the at least one pair of laser beams, wherein the measurement volume (M) is positioned successively at all points $P_i'$ with i = 1, ..., $N$, wherein the velocity of a fluid flow is measured at the points $P_i'$, wherein the points $P_i'$ are each located at a certain distance ($a_i$) from the object surface (O) on lines $L_i$, wherein the lines $L_i$ are each orthogonal to the tangential planes $T_i$ of the points $P_i$ located on the object surface (O) (with $P_i \neq P_{i+j} j \in \{1, ..., N\}$) and the points $P_i$ lie in each case on the lines $L_i$, wherein the angle bisector (W) of the at least one laser beam pair (I$_1$, I$_2$) is always positioned essentially orthogonally to the tangential planes $T_i$ of the points $P_i$ for $i = 1, .., N$.

2. A method according to claim 1, **characterized in that** at each point $P_i'$ (i = 1, ..., $N$) the amount of the resulting velocity $\vec{v}_i$ of a fluid flow is measured, wherein the resulting velocity is given by $|\vec{v}_i| = \sqrt{v_{x_i}^2 + v_{y_i}^2}$ or $|\vec{v}_i| = \sqrt{v_{x_i}^2 + v_{z_i}^2}$ or $|\vec{v}_i| = \sqrt{v_{y_i}^2 + v_{z_i}^2}$ depending on the orientation of the measuring volume (M), wherein $v_{x_i}$, $v_{y_i}$ and $v_{z_i}$ denote the velocity components of the fluid flow in three spatial directions ($x$, $y$, $z$).

3. A method according to claim 1, **characterised in that** the coordinates $x_i$, $y_i$, $z_i$ of all points $P_i$ on the object surface (O) are determined by extraction from an existing geometry model.

4. A method according to claim 1, **characterised in that** the coordinates $x_i$, $y_i$, $z_i$ of all points $P_i$ on the object surface (O) are determined by a method for the detection of 3D object surfaces.

5. A method according to any of claims 1 to 4, **characterized in that** the TCP (tool centre point) of the Doppler laser velocimeter is determined by means of a calibration unit (4), wherein the TCP of the Doppler laser velocimeter indicates the translational and rotational displacement relative to the centre point of the flange plate of a parallel or serial kinematic system with at least 6 degrees of freedom (1).

6. A method according to any of claims 1 to 5, wherein the object surface (O) is detected using a device for contactless detection of a 3D object surface (3), whereby there is obtained a three-dimensional point cloud corresponding to the object surface (O), **characterised in that** a control or regulating device assigns all points $P_i$ of the three-dimensional point cloud of the object surface (O) to a coordinate system and, in the process, coordinates $x_i$, $y_i$, $z_i$ are assigned to each point $P_i$, wherein there the coordinates $x_i'$, $y_i'$, $z_i'$ of points $P_i'$ are determined at a distance ($a_i$) from the object surface (O) on the basis of the coordinates $x_i$, $y_i$, $z_i$ obtained, wherein there is carried out interpolation between the points $P_i'$ in order to determine a trajectory (B) in the vicinity of the subject surface (O).

7. A method according to claim 6, **characterised in that** by using the device for detecting a 3D object surface (3) there is detected a movement of the object surface (O) substantially in real time.

8. A method for moving at least one trajectory (B) and for flow measurement of fluids in the vicinity of an object surface (O), comprising

- a parallel or serial kinematic system, with at least six degrees of freedom (1), in particular a six-axis industrial robot,
- a Doppler laser velocimeter with a tool coordinate system and at least one intersecting pair of laser beams ($l_1$, $l_2$),
- at least one control or regulating device, which contains geometry data of the object surface (O) and which is configured to define on the basis of the geometry data the orientation of the Doppler laser velocimeter (2) along at least one trajectory (B),
wherein the at least one control or regulating device ins configured to control the parallel or serial kinematic system with at least six degrees of freedom (1),
wherein the Doppler laser velocimeter is configured to form the at least one intersecting laser beam pair ($l_1$, $l_2$), wherein the common intersection point (S) of the at least one pair of laser beams forms a measurement volume (M), wherein the measurement volume (M) has at least one interference pattern with interference fringes, wherein the interference fringes are aligned in parallel to the angle bisector (W) of the at least one pair of laser beams, wherein the device is configured to

- position the measurement volume (M) successively at all points $P_i'$ with i = 1, ..., $N$ along the at least one trajectory (B) and
- measure the velocity of a fluid flow is measured at the points $P_i'$,

wherein the points $P_i'$ are each located at a certain distance ($a_i$) from the object surface (O) on lines $L_i$, wherein the lines $L_i$ are each orthogonal to the tangential planes $T_i$ of the points $P_i$ located on the object surface (O) (with $P_i \neq P_{i+j}$, $j \in \{1, ..., N\}$) and the points $P_i$ lie in each case on the lines $L_i$, and wherein the angle bisector (W) of the at least one laser beam pair ($l_1$, $l_2$) is always positioned essentially orthogonally to the tangential planes $T_i$ of the points $P_i$ for $i$ = 1, .., $N$.

9. A device according to claim 8, **characterised in that** the control or regulating device receives data from a device for non-contact detection of 3D object surfaces (3), wherein there is generated a geometry model from the data received.

10. A device according to claim 9, **characterised in that** the device for detecting a 3D object surface (3) either has a 3D scanning unit, preferably a 3D laser scanning unit, or a camera, preferably at least a digital camera.

11. A device according to any of claims 8 to 10, **characterised in that** the control or regulating device has a postprocessor, wherein the postprocessor is configured to translate the instructions for the parallel or serial kinematic system with at least six degrees of freedom (1), wherein the control or regulating device is configured to control and/or regulate the actuators of the parallel or serial kinematic system and to specify and/or monitor the movement along the at least one trajectory (B).

12. A device according to any of the claims 8 to 11, **characterised by** a calibrating unit (4) for the Doppler laser velocimeter (2), wherein the calibrating unit (4) has a CCD sensor.

**Revendications**

1. Procédé pour arrêter au moins une trajectoire courbe (B) à proximité d'une surface d'objet (O) et pour mesurer le débit de fluides à proximité de la surface d'objet (O) avec un vélocimètre Doppler à laser (2) fixé sur un système cinématique parallèle ou en série doté d'au moins 6 degrés de liberté (1), selon lequel est présent au moins un dispositif de commande ou de réglage qui contient des données géométriques de la surface d'objet (O), l'orientation du vélocimètre Doppler à laser (2) étant définie le long d'au moins une trajectoire courbe (B) à partir des données géométriques, cet au moins un dispositif de commande ou de réglage contrôlant le système cinématique parallèle ou en série doté d'au moins six degrés de liberté (1),

   le vélocimètre Doppler à laser (2) formant au moins une paire de rayons laser ($l_1$, $l_2$) se croisant, le point d'intersection commun (S) de l'au moins une paire de rayons laser formant un volume de mesure (M), lequel volume de mesure (M) comporte au moins un motif d'interférence avec des franges d'interférence, lesquelles franges d'interférence sont orientées parallèlement à la bissectrice (W) de l'au moins une paire de rayons laser, le volume de mesure (M) étant positionné successivement au niveau de tous les points $P_i'$, avec $i = 1, ... , N$, la vitesse d'un écoulement de fluide étant mesurée au niveau des points $P_i'$, lesquels points $P_i'$ sont disposés chacun à une distance déterminée ($a_i$) de la surface d'objet (O) sur des lignes $L_i$, lesquelles lignes $L_i$ sont disposées chacune de façon orthogonale sur les plans tangents $T_i$ des points $P_i$ se trouvant sur la surface d'objet (O) (avec $P_i \neq P_i + j$, $j \in \{1, ... , N\}$) et les points $P_i$ étant disposés chacun sur les lignes $L_i$, la bissectrice (W) de l'au moins une paire de rayons laser ($l_1$, $l_2$) étant constamment positionnée de façon sensiblement orthogonale aux plans tangents $T_i$ des points $P_i$ pour $i = 1, ... , N$.

2. Procédé selon la revendication 1, **caractérisé en ce que** la valeur de la vitesse résultante $\vec{v_i}$ d'un écoulement de fluide est mesurée au niveau de chaque point $P_i'$ (i = 1, ... , N), la vitesse résultante étant donnée selon l'orientation

$$|\vec{v}_i| = \sqrt{v_{x_i}^2 + v_{y_i}^2} \qquad |\vec{v}_i| = \sqrt{v_{x_i}^2 + v_{z_i}^2} \qquad \vec{|v_i|} = \sqrt{v_{y_i}^2 + v_{z_i}^2}$$

   du volume de mesure (M) par                    ou                    ou                    , $v_{xi}$, $v_{yi}$ et $v_{zi}$ désignant les composantes de vitesse de l'écoulement de fluide dans trois directions spatiales (x, y, z).

3. Procédé selon la revendication 1, **caractérisé en ce que** les coordonnées $x_i$, $y_i$, $z_i$ de tous les points $P_i$ sur la surface d'objet (O) sont déterminées par extraction d'un modèle géométrique existant.

4. Procédé selon la revendication 1, **caractérisé en ce que** les coordonnées $x_i$, $y_i$, $z_i$ de tous les points $P_i$ sur la surface d'objet (O) sont déterminées par une méthode de détection de surfaces d'objet 3D.

5. Procédé selon une des revendications 1 à 4, **caractérisé en ce que** le Tool Point Center, TCP, du vélocimètre Doppler à laser est déterminé au moyen d'une unité d'étalonnage (4), le TCP du vélocimètre Doppler à laser indiquant le déplacement translatoire et rotatoire par rapport au point central de la platine d'un système cinématique parallèle ou en série doté d'au moins 6 degrés de liberté (1).

6. Procédé selon une des revendications 1 à 5, selon lequel la surface d'objet (O) est détectée avec un dispositif de détection sans contact de surface d'objet 3D (3) par le biais duquel un nuage de points tridimensionnel correspondant à la surface d'objet (O) est acquis, **caractérisé en ce qu'**un dispositif de commande ou de réglage associe tous les points $P_i$ du nuage de points tridimensionnel de la surface d'objet (O) à un système de coordonnées et qu'ainsi des coordonnées $x_i$, $y_i$, $z_i$ sont associées à chaque point $P_i$, les coordonnées $x_i'$, $y_i'$, $z_i'$ des points $P_i'$ étant déterminés à une distance ($a_i$) de la surface d'objet (O) à partir des coordonnées acquises $x_i$, $y_i$, $z_i$, une interpolation étant effectuée entre les points $P_i'$ pour déterminer une trajectoire courbe (B) à proximité de la surface d'objet (O).

7. Procédé selon la revendication 6, **caractérisé en ce qu'**avec le dispositif pour détecter une surface d'objet 3D (3), un mouvement de la surface d'objet (O) est détecté sensiblement en temps réel.

8. Dispositif pour arrêter au moins une trajectoire courbe (B) et pour mesurer le débit de fluides à proximité de la surface d'objet (O), comprenant

   - un système cinématique parallèle ou en série doté d'au moins six degrés de liberté (1), en particulier un robot industriel à six axes,
   - un vélocimètre Doppler à laser avec un système de coordonnées d'outil et au moins une paire de rayons laser

(I$_1$, I$_2$) se croisant et

- au moins un dispositif de commande ou de réglage qui contient des données géométriques de la surface d'objet (O) et qui est équipé pour définir l'orientation du vélocimètre Doppler à laser (2) le long d'au moins une trajectoire (B) à partir des données géométriques,

dans lequel l'au moins un système de commande ou de réglage est adapté pour contrôler le système cinématique parallèle ou en série doté d'au moins six degrés de liberté (1),

dans lequel le vélocimètre Doppler à laser est adapté pour former au moins la paire de rayons laser (I$_1$, I$_2$) se croisant, le point d'intersection commun (S) de l'au moins une paire de rayons laser formant un volume de mesure (M), lequel volume de mesure (M) comporte au moins un motif d'interférence avec des franges d'interférence, lesquelles franges d'interférence sont orientées parallèlement à la bissectrice (W) de l'au moins une paire de rayons laser,

lequel dispositif est adapté

- pour positionner le volume de mesure (M) successivement au niveau de tous les points P$_i$', avec i = 1, ... , N, le long de l'au moins une trajectoire courbe (B) et
- pour mesurer la vitesse d'un écoulement de fluide au niveau des points $P_i'$,

les points P$_i$' étant disposés chacun à une distance déterminée (a$_i$) de la surface d'objet (O) sur des lignes L$_i$, lesquelles lignes L$_i$ sont disposées chacune de façon orthogonale sur les plans tangents T$_i$ des points P$_i$ se trouvant sur la surface d'objet (O) (avec P$_i \neq$ P$_i$+$_j$, j $\in$ {1, ... , N}) et les points P$_i$ étant disposés chacun sur les lignes L$_i$ et

la bissectrice (W) de l'au moins une paire de rayons laser (I$_1$, I$_2$) étant constamment positionnée de façon sensiblement orthogonale aux plans tangents T$_i$ des points P$_i$ pour i = 1, ... , N.

9. Dispositif selon la revendication 8, **caractérisé en ce que** le système de commande ou de réglage reçoit des données d'un dispositif de détection sans contact de surfaces d'objet 3D (3), un modèle géométrique étant généré à partir des données reçues.

10. Dispositif selon la revendication 9, **caractérisé en ce que** le dispositif de détection de surface d'objet 3D (3) comporte soit une unité de scannage, de préférence une unité de scannage laser 3D, soit une caméra, de préférence au moins une caméra numérique.

11. Dispositif selon une des revendications 8 à 10, **caractérisé en ce que** le système de commande ou de réglage comporte un post-processeur, lequel post-processeur est adapté pour traduire les instructions destinées au système cinématique parallèle ou en série doté d'au moins 6 degrés de liberté (1), le système de commande ou de réglage étant adapté pour commander et/ou régler les actionneurs du système cinématique parallèle ou en série et pour spécifier et/ou pour surveiller le mouvement le long de l'au moins une trajectoire courbe (B).

12. Dispositif selon une des revendications 8 à 11, **caractérisé par** une unité d'étalonnage (4) pour le vélocimètre Doppler à laser (2), laquelle unité d'étalonnage (4) comporte un capteur CCD.

Fig. 1

Fig. 2

Fig. 3

**IN DER BESCHREIBUNG AUFGEFÜHRTE DOKUMENTE**

**In der Beschreibung aufgeführte Patentdokumente**

- US 2006181236 A1

- US 2004125378 A1


**In der Beschreibung aufgeführte Nicht-Patentliteratur**

- **N. C. TEMPERLEY et al.** *Flow Measurement and Instrumentation,* 2004, vol. 15, 155-165
- **BERTINI et al.** EXPERIMENTAL MECHANICS. SPRINGER, 17. Oktober 2016, vol. 57

- **CHESNAKAS CJ E.** EXPERIMENTS IN FLUIDS. SPRINGER, 01. Juni 1994, vol. 17